# EUROPEAN PATENT SPECIFICATION

(11) **EP 2 571 333 B1**
(45) Date of publication and mention of the grant of the patent: **23.04.2014**
(21) Application number: 12183201.8
(22) Date of filing: 05.09.2012
(51) Int. Cl.: H05B 33/08

(54) **Solid light-emitting element driving device and illumination device**
Ansteuerungsvorrichtung für eine feste LED-Beleuchtungsvorrichtung und Beleuchtungsvorrichtung
Dispositif de commande à élément électroluminescent solide et dispositif d'éclairage

(30) Priority: 14.09.2011 JP 2011200319
(43) Date of publication of application: 20.03.2013
(73) Proprietor: Panasonic Corporation, Osaka 571-8501 (JP)
(72) Inventor: Fukuda, Kenichi, Osaka, Osaka 540-6207 (JP); Naruo, Masahiro, Osaka, Osaka 540-6207 (JP); Ido, Shigeru, Osaka, Osaka 540-6207 (JP); Esaki, Sana, Osaka, Osaka 540-6207 (JP)
(74) Representative: Rüger, Barthelt & Abel

(56) References cited:
- JP-A- 2011 130 543
- JP-A- 2011 171 232
- US-A1- 2010 109 537

## Description

### [Field of the Invention]

The present invention relates to a solid light-emitting element driving device that drives a solid light-emitting element such as a light-emitting diode or an organic electroluminance element, and an illumination device using the same.

### [Background Art]

In recent years, an illumination device that has a light-emitting diode or an organic electroluminescence (EL) element in place of an incandescent lamp or a fluorescent lamp as a light source has become widespread.

JP- 2011-171232 A discloses a conventional example of a driving device (illumination device) that drives (lights on) a light-emitting diode (LED). In the conventional example described in Patent Literature 1, a step-up chopper circuit that is connected to a commercial AC power source and that is provided for power factor improvement; a step-down chopper circuit that steps a DC voltage of the step-up chopper circuit down to a driving voltage of a light source (series circuit including a plurality of LEDs); a control circuit that controls the step-up chopper circuit; a control circuit that controls the step-down chopper circuit; etc are included.

The step-up chopper circuit steps-up an undulating voltage, which is obtained by subjecting a power source voltage of the commercial AC power source to full-wave rectification, up to a desired DC voltage, and includes: a switching element, a choke coil (inductor), a diode, a smoothing capacitor, etc. Specifically, between undulating output ends of a diode bridge, the choke coil, the diode, and the smoothing capacitor are serially connected together and the switching element is connected in parallel to the diode and the smoothing capacitor.

The control circuit performs control (PWM control) to bring an output voltage into agreement with a desired voltage value by adjusting an ON-duty ratio of the switching element. Moreover, the control circuit controls in a so-called critical mode in which the switching element is turned on at timing at which a current flowing to the choke coil turns to zero and the switching element is turned off at a time point at which the output voltage agrees with a target value.

The step-down chopper circuit steps the DC voltage supplied from the step-up chopper circuit down to the driving voltage (= forward voltage of the LED ×the number of those connected serially) of the light source, and includes a switching element, an inductor, a capacitor, a diode, a sensing resistor, etc. Specifically, between output ends of the step-up chopper circuit, the switching element, the inductor, the capacitor, and the sensing resistor are connected together serially, the diode is connected in parallel to the inductor and the capacitor, and the light source is connected to both ends of the capacitor.

The control circuit controls (PWM control) to bring an output voltage of the step-down chopper circuit into agreement with the driving voltage by adjusting the ON-duty ratio of the switching element. Moreover, the control circuit controls in a so-called critical mode in which the switching element is turned on at timing at which a current flowing to the inductor turns to zero and the switching element is turned off at a time point at which a current flowing to the sensing resistor (driving current flowing to the light source) agrees with a target value.

JP 2011-130543 A, which is considered to represent the next prior art document, discloses a solid light-emitting driving device having the features of the preamble of independent claim 1.

### [Disclosure of the Invention]

### [Problems to be solved by the Invention]

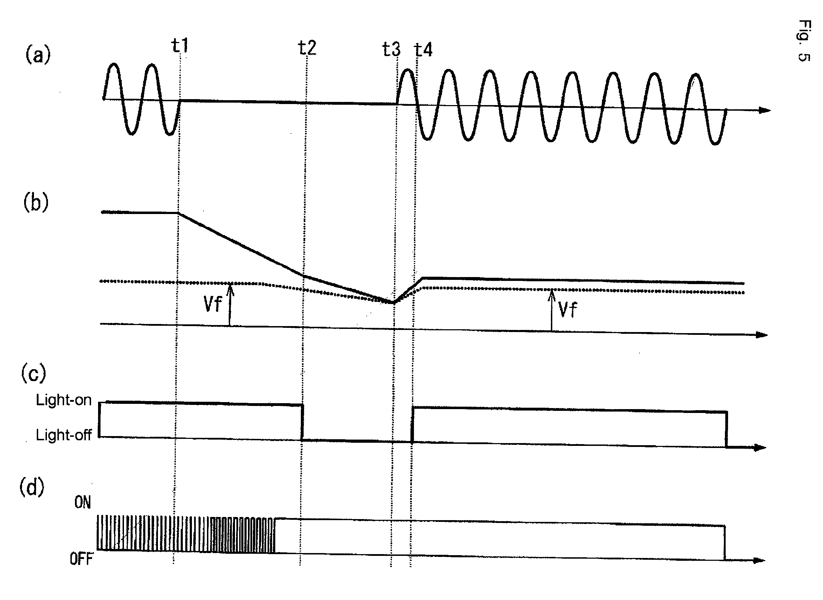

In the conventional example described above, when electric power returns after a power source voltage of the commercial AC power source has instantaneously decreased or failed (hereinafter called instantaneous power failure), there is a risk that an output voltage of the step-up chopper circuit is clumped to an intended low voltage. Hereinafter, this will be described in detail, referring to a time chart of Fig. 5.

In Fig. 5, (a) shows a power source voltage VAC of the commercial AC power source, a solid line of (b) shows an output voltage VDC of the step-up chopper circuit, and a broken line of (b) shows an output voltage Vo of the step-down chopper circuit. Moreover, in Fig. 5, (c) shows a state (light-on, light-off) of the light source and (d) shows a state (ON, OFF) of the switching element of the step-down chopper circuit.

At time of normal operation (before time t1), the output voltage VDC of the step-up chopper circuit is stepped up to a high voltage (for example, 300 to 400 volts) that is sufficiently higher than the power source voltage VAC (effective value 100 volts), and the output voltage Vo of the step-down chopper circuit is kept at the driving voltage Vf (for example, several tens of volts) of the light source. Then upon occurrence of the instantaneous power failure at the time t1, electric charges accumulated at the smoothing capacitor of the step-up chopper circuit are gradually discharged whereby the output voltage VDC of the step-up chopper circuit gradually decreases. On the other hand, even when the output voltage VDC of the step-up chopper circuit has decreased, the output voltage Vo of the step-down chopper circuit is kept at the driving voltage Vf until the ON-duty ratio of the switching element reaches 100%. Then after the control circuit turns the ON-duty ratio of the switching element to 100%, the output voltage Vo of the step-down chopper circuit gradually decreases to fall below the driving voltage Vf, and the light source is lit off at time t2. A smoothing capacitor is also used for a power source circuit that supplies a power source to the control circuits of the step-up chopper circuit and the step-down circuit, and thus the operating power source is supplied from the power source circuit to each control circuit for a while even after power failure, which permits control operation.

Then, when electric power of the commercial AC power source returns in a state in which the accumulated electric charges of the smoothing capacitor are still left (time t3), both the output voltage VDC of the step-up chopper circuit and the output voltage Vo of the step-down chopper circuit rise. At this time, the light source is turned off, thus resulting in a non-load state; therefore, each of the output voltages VDC and Vo rise by substantially equal voltage values. Moreover, due to a small potential difference between an input voltage (the output voltage VDC of the step-up chopper circuit) and the output voltage Vo, the control circuit of the step-down chopper circuit keeps the switching element of the step-down chopper circuit at a constantly-ON state (state in which the ON-duty ratio is 100%).

Then, when the output voltage Vo of the step-down chopper circuit exceeds over the driving voltage Vf, the driving current flows to light on the light source. Even after the power source is lit on, the switching element of the step-down chopper circuit is in the constantly-ON state, and thus the output current continues to be constantly supplied from the step-up chopper circuit to the step-down chopper circuit.

On the other hand, the control circuit of the step-up chopper circuit switches the switching element as usual during a period from when the power returns to when the light source is lit on again (time t3 to t4), but at and after the time t4 when the light source is lit on again, can no longer turn on the switching element since the output current constantly flows. As a result, the output voltage VDC of the step-up chopper circuit is clumped at a voltage obtained by adding together the driving voltage Vf of the light source and a voltage drop in the step-down chopper circuit due to the output current (driving current) (mainly voltage drop due to the sensing resistor). Specifically, this results in a state in which a series circuit of the light source and the sensing resistor is connected between the output ends of the step-up copper circuit, and the output voltage of the step-up chopper circuit is not stepped up to a desired voltage and also it is no longer possible to control the driving current by the step-down chopper circuit. Note that in the case where the light source is a fluorescent lamp, the fluorescent lamp is not lit on again before the output voltage VDC of the step-up chopper circuit rises up to the desired voltage value after the power return from the instantaneous power failure, and thus the problem as described above does not occur. This is because in a lighting circuit for the fluorescent lamp, after the output voltage of the step-up chopper circuit rises up to the desired voltage value, a starting voltage considerably higher than a voltage at time of steady lighting is applied to the fluorescent lamp to light it on.

In view of the problem described above, the present invention has been made, and it is an object of the present invention to suppress occurrence of a problem upon power return from instantaneous power failure.

To achieve the object described above, a solid light-emitting element driving device according to the present invention includes: anAC-DC conversion part converting an AC voltage supplied from an AC power source into a desired DC voltage and then outputting the DC voltage; and a DC-DC conversion part stepping the output voltage of the AC-DC conversion part down to a driving voltage required for driving one or a plurality of solid light-emitting elements, wherein the DC-DC conversion part has: a series circuit including a switching element, an inductor, a capacitor, and a resistor connected together between output ends of the AC-DC conversion part; and a control part detecting a driving current flowing to the one or plurality of solid light-emitting elements by use of the resistor and then performing switching control of the switching element in accordance with a result of the detection of the driving current, wherein the one or plurality of solid light-emitting elements is formed to be connected between both ends of the capacitor. According to present inventions, forced OFF means is provided which causes the control part to turn off the switching element when the output voltage of the AC-DC conversion part falls below a first predetermined value in a state in which the control part can perform the switching control, and causes the control part to restart switching control of the switching element in accordance with a result of the detection of the driving current when the output voltage of the AC-DC conversion part exceeds a second predetermined value higher than the first predetermined value.

In the solid light-emitting element driving device according to one embodiment, the control part, after turning off the switching element, preferably restarts switching the switching element with an ON-duty ratio of the switching element limited at a predetermined value or less while the output voltage of the AC-DC conversion part is below the second predetermined value, and releases the limit when the output voltage exceeds the second predetermined value.

In the solid light-emitting element driving device according to another embodiment, the control part preferably keeps an OFF state of the switching element while the output voltage of the AC-DC conversion part is below the second predetermined value.

In the solid light-emitting element driving device according to an embodiment, the forced OFF means preferably comprises a power source circuit arranged to create an operating power source from the output voltage of the AC-DC conversion part and to supply the operating power source created to the control part, wherein the control part stops operation to forcefully turn off the switching element when the power source voltage falls below an operation stopping voltage and restarts operation to control switching of the switching element when the power source voltage exceeds an operation starting voltage.

An illumination device includes: a light source part which includes one or a plurality of solid light-emitting elements; and a lighting device which includes a solid light-emitting element driving device according to anyone of the above mentioned embodiments, which drives any of the solid light-emitting elements and lights on the light source part.

### [Effects of the Invention]

The solid light-emitting element driving device and the illumination device of the present invention provide an effect of suppressing occurrence of a problem upon power return from instantaneous power failure.

### [Brief Description of the Drawings]

[Fig. 1] Fig. 1 is a circuit diagram showing a first embodiment of a solid light-emitting element driving device and an illumination device according to the present invention.
[Fig. 2] Fig. 2 is a time chart illustrating an operation of these devices upon instantaneous power failure.
[Fig. 3] Fig. 3 is a circuit diagram showing a second embodiment of the solid light-emitting element driving device and the illumination device according to the present invention.
[Fig. 4] Fig. 4 is a time chart illustrating an operation of these devices upon instantaneous power failure.
[Fig. 5] Fig. 5 is a time chart illustrating an operation upon instantaneous power failure in a conventional example.

### [Best Modes for Carrying out the Invention]

Hereinafter, referring to the accompanying drawings, a detailed description will be given on embodiments of a solid light-emitting element driving device driving a light-emitting diode (LED) and an illumination device using the solid light-emitting element driving device according to the technical aspects of the present invention. Note that the solid light-emitting element driving device and the illumination device to which the technical aspects of the present invention can be applied are not limited to those having an LED as a solid light-emitting element, and thus may be, for example, a solid light-emitting element driving device and an illumination device for driving a solid light-emitting element, such as an organic EL element, other than the LED.

### (First Embodiment)

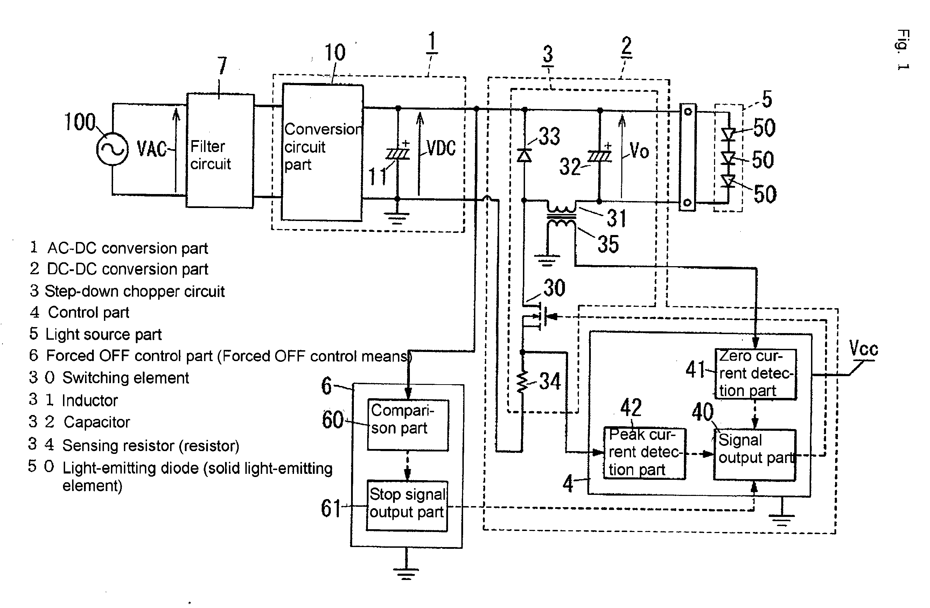

The illumination device of the present embodiment includes: a light source part 5 that has a plurality of (only three are shown in the figure) LEDs 50 connected together in series as shown in Fig. 1; and a solid light-emitting element driving device (LED lighting device) that drives the light source part 5.

The LED lighting device includes: an AC-DC conversion part 1, a DC-DC conversion part 2, a forced OFF control part 6, etc. The AC-DC conversion part 1 is connected between output ends of an AC power source 100 via a filter circuit 7. The AC-DC conversion part 1 includes a conversion circuit part 10 and a smoothing capacitor 11.

The conversion circuit part 10 has: for example, a full-wave rectifier (not shown) that subjects an AC voltage VAC of the AC power source 100 to full-wave rectification; a control circuit (not shown) that controls a well-known step-up chopper circuit (not shown) and a switching element of the step-up chopper circuit; etc. The step-up chopper circuit and the control circuit are conventionally well-known, and are described briefly in the background technique part and thus omitted from the description.

The DC-DC conversion part 2 has: a well-known step-down chopper circuit 3, and a control part 4 that controls the step-down chopper circuit 3. The step-down chopper circuit 3 steps down an output voltage VDC of the AC-DC conversion part 1 to a driving voltage of the light source part 5 (= forward voltage of the LED 50 × the number of those serially connected together), and includes: a switching element 30, an inductor 31, a capacitor 32, a diode 33, a sensing resistor 34, etc. Specifically, between the output ends of the AC-DC conversion part 1, the capacitor 32, the inductor 31, the switching element 30, and the sensing resistor 34 are serially connected together, and the diode 33 is connected in parallel to the inductor 31 and the capacitor 32, and between both ends of the capacitor, the light source part 5 is connected.

The control part 4 includes: a signal output part 40 that outputs a driving signal to a gate of the switching element 30; a zero current detection part 41 that detects that a current flowing to the inductor 31 has turned to zero; a peak current detection part 42 that detects a current flowing to the sensing resistor 34 (driving current flowing to the light source part 5); etc. The zero current detection part 41 outputs a detection signal to the signal output part 40 upon detection, based on an induced voltage induced by a detection wiring 35 magnetically coupled to the inductor 31, that the current flowing to the inductor 31 has turned to zero. The peak current detection part 42 outputs a detection signal to the signal output part 40 when the driving current has reached a peak value.

The signal output part 40, upon the output of the detection signal from the zero current detection part 41, raises a driving signal to a high level to turn on the switching element 30, and turns off the switching element 30 upon output of the detection signal from the peak current detection part 42. That is, the control part 4 controls the step-down chopper circuit 3 in a critical mode (current critical mode) described in the conventional example. Note that the control part 4 operates as a result of supply of an operating power source (power source voltage Vcc) from a power source circuit (not shown).

The forced OFF control part 6 includes: a comparison part 60 that compares the output voltage VDC of the AC-DC conversion part 1 with a first threshold value Vth1 and a second threshold value Vth2 (where Vth1 < Vth2); and a stop signal output part 61 that outputs a stop signal in accordance with a result of the comparison by the comparison part 60. The comparison part 60 outputs a detection signal when the output voltage VDC (actually a voltage obtained by dividing the output voltage VDC by a dividing resistor) has fallen below the first threshold value Vth1, and stops the output of the detection signal when the output voltage VDC has risen to exceed the second threshold value Vth2. The stop signal output part 61 provides the stop signal to the signal output part 40 of the control part 4 forming the DC-DC conversion part 2 only for a period during which the detection signal is outputted from the comparison part 60. Then the signal output part 40 forcefully maintains an OFF state of the switching element 30 by not outputting the driving signal for a period during which the stop signal is provided, and restarts outputting of the driving signal when the stop signal is no longer provided.

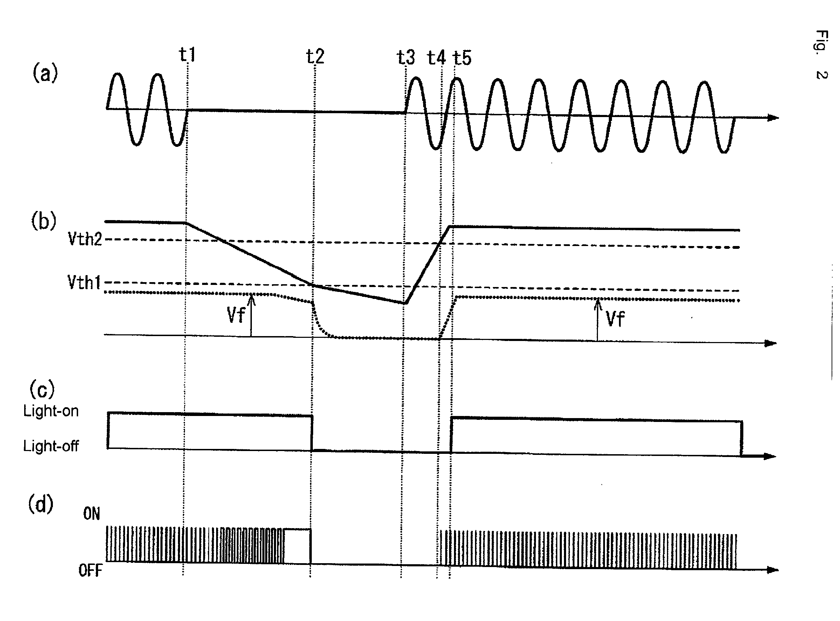

Next, operation performed upon occurrence of instantaneous power failure in the AC power source 100 will be described in detail, referring to a time chart of Fig. 2.

In Fig. 2, (a) shows a power source voltage VAC of the AC power source 100 and a solid line of (b) shows the output voltage VDC of the AC-DC conversion part 1, and a broken line of (b) shows an output voltage Vo of the DC-DC conversion part 2. Moreover, in Fig. 2, (c) shows a state (light-on, light-off) of the light source part 5 and (d) shows a state (ON, OFF) of the switching element 30 of the step-down chopper circuit 3.

At time of normal operation (before time t1), the output voltage VDC of the AC-DC conversion part 1 is stepped up to a high voltage (for example, 300 to 400 volts) that is sufficiently higher than the power source voltage VAC (effective value 100 volts), and the output voltage Vo of the DC-DC conversion part 2 is kept at a driving voltage Vf (for example, several tens of volts) of the light source part 5. Then upon occurrence of the instantaneous power failure at the time t1, electric charges accumulated at the smoothing capacitor 11 of the AC-DC conversion part 1 are gradually discharged whereby the output voltage VDC of the AC-DC conversion part 1 gradually decreases.

On the other hand, even when the output voltage VDC of the AC-DC conversion part 1 decreases, the output voltage Vo of the DC-DC conversion part 2 is kept at the driving voltage Vf until an ON-duty ratio of the switching element 30 reaches 100%. Then after the control part 4 turns the ON-duty ratio of the switching element 30 to 100%, the output voltage Vo of the DC-DC conversion part 2 gradually decreases to fall below the driving voltage Vf. A smoothing capacitor is also used for the power source circuit that supplies the operating power source to the control circuit of the conversion circuit part 10 and the control part 4, and therefore the operating power source is supplied for a while even after power failure.

Then when the output voltage VDC of the AC-DC conversion part 1 has fallen below the first threshold value Vth1 (time t2), the detection signal is outputted from the comparison part 60 and thus the stop signal is provided from the stop signal output part 61 to the signal output part 40 of the control part 4. Upon reception of the stop signal, the control part 4 stops the output of the driving signal to thereby forcefully turn off the switching element 30. When the switching element 30 has been turned off, electric charges of the capacitor 32 are discharged, as a result of which the output voltage Vo of the DC-DC conversion part 2 rapidly decreases to light off the light source part 5.

Then, when electric power of the AC power source 100 returns in a state in which the accumulated electric charges of the smoothing capacitor 11 are still left (time t3), the output voltage VDC of the AC-DC conversion part 1 rises. At this time, the signal output part 40 of the control part 4 has turned off the switching element 30 by the stop signal provided from the forced OFF control part 6, and thus the output voltage Vo of the DC-DC conversion part 2 does not rise.

Here, unlike the conventional example, the switching element 30 of the step-down chopper circuit 3 is OFF, and thus an output current does not flow from the AC-DC conversion part 1 to the DC-DC conversion part 2. Therefore, the output voltage VDC of the AC-DC conversion part 1 can continuously rise without being clumped by a voltage obtained by adding together the driving voltage Vf of the light source part 5 and a voltage drop in the step-down chopper circuit 3 due to the output current (driving current). Then when the output voltage VDC of the AC-DC conversion part 1 has exceeded the second threshold value Vth2, the detection signal is no longer outputted from the comparison part 60, and thus the stop signal is no longer provided from the stop signal output part 61 to the signal output part 40 of the control part 4. As a result, the control part 4 outputs a driving signal to restart switching of the switching element 30, and thus when the output voltage Vo of the DC-DC conversion part 2 has risen to exceed the driving voltage Vf, the driving current flows to light on the light source part 5 (time t5). At this time, the output voltage VDC of the AC-DC conversion part 1 has already risen to a desired voltage, and thus operation of controlling the step-down chopper circuit 3 by the control part 4 continues to be performed properly.

As described above, in the present embodiment, when the AC power source 100 has been instantaneously power failed, the switching element 30 of the step-down chopper circuit 3 is forcefully turned off. Thus, the output voltage VDC of the AC-DC conversion part 1 is not clumped at a voltage lower than a desired voltage, which can suppress occurrence of a problem upon power return from the instantaneously power failure.

Note that the control part 4 (signal output part 40) does not necessarily have to continuously keep the switching element 30 in an OFF state while the stop signal is outputted from the forced OFF control part 6. For example, the control part 4 (signal output part 40) may, after turning off the switching element 30 as a result of being provided with the stop signal, limits the ON-duty ratio of the switching element 30 at a predetermined value or less and release the limit when the stop signal is no longer provided.

### (Second Embodiment)

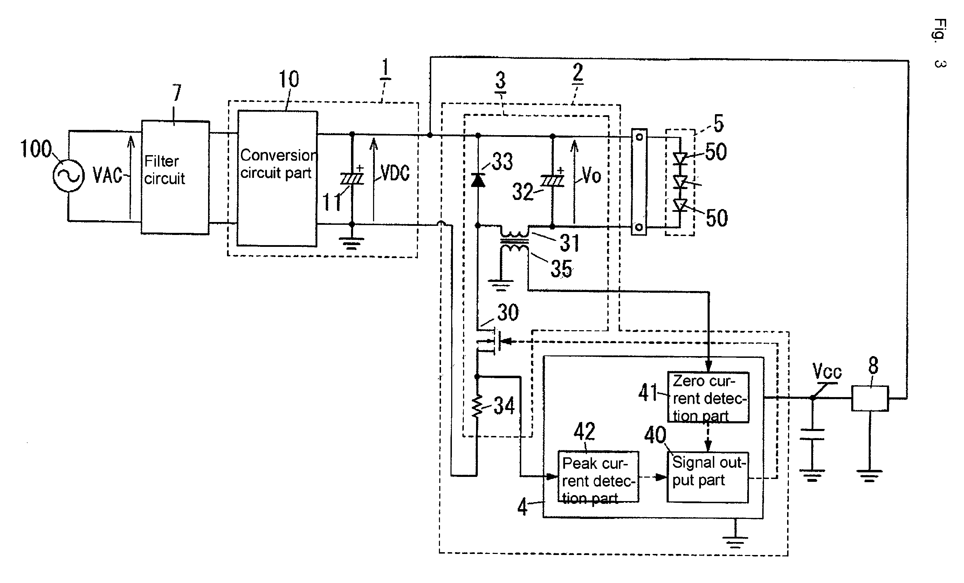

The present embodiment, as shown in Fig. 3, is characterized in that in place of the forced OFF control part 6 according to the first embodiment, a power source circuit 8 that supplies an operating power source to the control part 4 is provided as a forced OFF means. Note that other configuration is shared by the first embodiment and the same numerals are provided to the common components and thus their description will be omitted.

The power source circuit 8 in the present embodiment is formed of a general-purpose three-terminal regulator IC and creates an operating power source from an output voltage VDC of an AC-DC conversion part 1. Note that the output voltage VDC of the AC-DC conversion part 1 is a considerably high voltage as an input voltage of the three-terminal regulator IC and thus it is desirable to reduce the output voltage VDC through an appropriate method such as resistance voltage division to apply it to an input terminal of the three-terminal regulator IC.

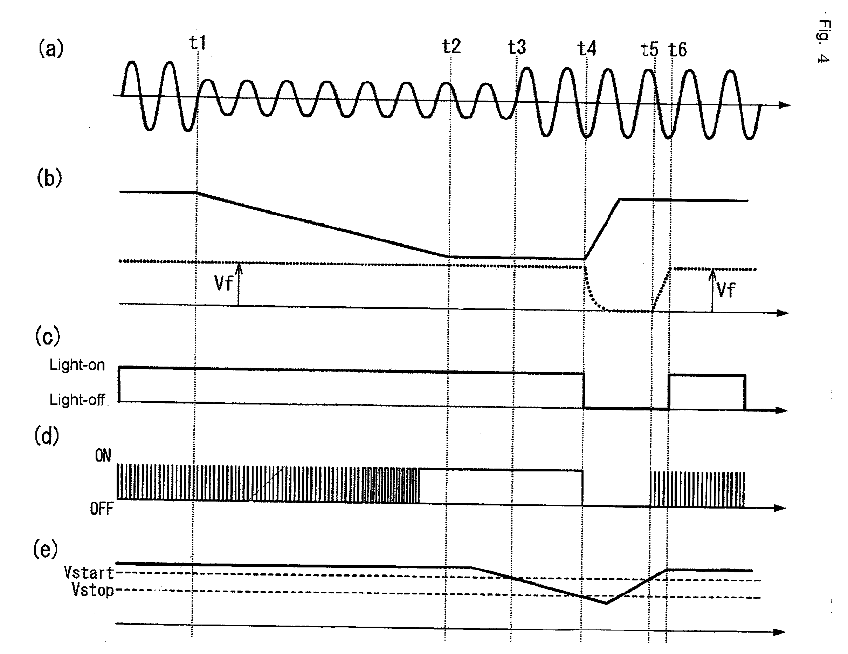

Next, operation performed upon occurrence of instantaneously power failure in an AC power source 100 will be described in detail, referring to a time chart of Fig. 4.

In Fig. 4, (a) shows a power source voltage VAC of the AC power source 100 and a solid line of (b) shows the output voltage VDC of the AC-DC conversion part 1 and a broken line of (b) shows an output voltage Vo of a DC-DC conversion part 2. Moreover, in Fig. 4, (c) shows a state (light-on, light-off) of a light source part 5, (d) shows a state (ON, OFF) of a switching element 30 of a step-down chopper circuit 3, and (e) shows a power source voltage Vcc of the operating power source supplied from the power source circuit 8.

Upon the occurrence of instantaneous power failure (voltage drop in the example shown) at time t1, electric charges accumulated at a smoothing capacitor 11 are gradually discharged whereby the output voltage VDC of the AC-DC conversion part 1 gradually decreases. On the other hand, even when the output voltage VDC of the AC-DC conversion part 1 decreases, the output voltage Vo of the DC-DC conversion part 2 is kept at a driving voltage Vf until an ON-duty ratio of the switching element 30 reaches 100%. Then after a control part 4 turns the ON-duty ratio of the switching element 30 to 100%, an output current constantly flows to a conversion circuit part 10 so that the output voltage VDC of the AC-DC conversion part 1 is clumped (time t2). Then even when electric power of the AC power source 100 returns (time t3), the output voltage VDC of the AC-DC conversion part 1 remains clumped at a low voltage.

On the other hand, in the case where the output voltage VDC of the AC-DC conversion part 1 has been clumped at the low voltage, the power source voltage Vcc supplied from the power source circuit 8 gradually decreases, and at a time point at which the power source voltage Vcc falls below an oscillation stopping voltage Vstop of the control part 4 (time t4), the control part 4 stops the operation to forcefully turn off the switching element 30. As a result, the DC-DC conversion part 2 stops to light off the light source part 5.

Then when the switching element 30 has been turned off, the output current no longer flows from the AC-DC conversion part 1 to the DC-DC conversion part 2 and thus the output voltage VDC of the AC-DC conversion part 1 is not clumped and starts to rise. Following the rise of the output voltage VDC of the AC-DC conversion part 1, the power source voltage Vcc supplied from the power source circuit 8 also rises, and at a time point (time t5) at which the power source voltage Vcc has exceeded an oscillation starting voltage Vstart (>Vstop) of the control part 4, the control part 4 restarts the operation. Note that circuit constants of the AC-DC conversion part 1 and the power source circuit 8 are set so that the output voltage VDC reaches a desired voltage before the power source voltage Vcc exceeds the oscillation starting voltage Vstart.

When, as a result of the restart of the operation by the control part 4, the output voltage Vo of the DC-DC conversion part 2 has risen to exceed the driving voltage Vf of the light source part 5, the light source part 5 lights on (time t6). At this time, the output voltage VDC of the AC-DC conversion part 1 has already risen to the desired voltage, and thus operation of controlling the step-down chopper circuit 3 by the control part 4 continues to be properly performed.

As described above, also in the present embodiment, the switching element 30 of the step-down chopper circuit 3 is forcefully turned off upon the instantaneously power failure of the AC power source 100. Thus, the output voltage VDC of the AC-DC conversion part 1 is not continuously clumped at a voltage lower than the desired voltage, and occurrence of a problem upon power return from the instantaneously power failure can be suppressed.

- 1: AC-DC conversion part
- 2: DC-DC conversion part
- 3: Step-down chopper circuit
- 4: Control part
- 5: Light source part
- 6: Forced OFF control part (forced OFF means)
- 30: Switching element
- 31: Inductor
- 32: Capacitor
- 34: Sensing resistor
- 50: Light-emitting diode (solid light-emitting element)

## Claims

1. A solid light-emitting element driving device comprising:
an AC-DC conversion part (1) converting an AC voltage (VAC) supplied from an AC power source (100) into a desired DC voltage (VDC) and then outputting the DC voltage; and
a DC-DC conversion part (2) stepping the output voltage (VDC) of the AC-DC conversion part (1) down to a driving voltage (Vf) required for driving one or a plurality of solid light-emitting elements (50), wherein
the DC-DC conversion part (2) has: a series circuit including a switching element (30), an inductor (31), a capacitor (32), and a resistor (34) connected together between output ends of the AC-DC conversion part (1); and a control part (4) detecting a driving current flowing to the one or plurality of solid light-emitting elements (50) by use of the resistor (34) and then performing switching control of the switching element (30) in accordance with a result of the detection of the driving current,
wherein the one or plurality of solid light-emitting elements is connected between both ends of the capacitor (32),
**characterized by** further comprising:
forced OFF means (6; 8) which causes the control part (4) to turn off the switching element (30) when the output voltage (VDC) of the AC-DC conversion part (1) falls below a first predetermined value in a state where the control part (4) can perform the switching control, and causes the control part (4) to restart switching control of the switching element (30) in accordance with a result of the detection of the driving current when the output voltage (VDC) of the AC-DC conversion part (1) exceeds a second predetermined value higher than the first predetermined value.

2. The solid light-emitting element driving device according to claim 1, wherein
the control part (4), after turning off the switching element (30), restarts switching the switching element (30) with an ON-duty ratio of the switching element (30) limited at a predetermined value or less while the output voltage (VDC) of the AC-DC conversion part (1) is below the second predetermined value, and releases the limit when the output voltage (VDC) exceeds the second predetermined value.

3. The solid light-emitting element driving device according to claim 1, wherein
the control part (4) keeps an OFF state of the switching element (30) while the output voltage (VDC) of the AC-DC conversion part (1) is below the second predetermined value.

4. The solid light-emitting element driving device according to claim 1, wherein
the forced OFF means comprises a power source circuit (8) arranged to create an operating power source from the output voltage (VDC) of the AC-DC conversion part (1) and to supply the operating power source created to the control part (4), wherein the control part (4) stops operation to forcefully turn off the switching element (30) when the power source voltage (Vcc) falls below an operation stopping voltage (Vstop) and restarts operation to control switching of the switching element (30) when the power source voltage (Vcc) exceeds an operation starting voltage (Vstart).

5. An illumination device comprising:
a light source part (5) including one or a plurality of solid light-emitting elements (50); and
a lighting device including the solid light-emitting element driving device (1-4, 6, 7; 8) according to any of claims 1 to 4 and lighting on the light source part (5).

## Patentansprüche

1. Ansteuerungsvorrichtung für feste lichtemittierende Elemente, die aufweist:
einen AC-DC-Umwandlungsteil (1), der eine AC-Spannung (VAC), die von einer AC-Energiequelle (100) geliefert wird, in eine gewünschte DC-Spannung (VDC) umwandelt und die DC-Spannung anschließend ausgibt; und
einen DC-DC-Umwandlungsteil (2), der die Ausgangsspannung (VDC) des AC-DC-Umwandlungsteils (1) auf eine Ansteuerungsspannung (Vf) herunter transformiert, die zur Ansteuerung eines oder mehrerer fester lichtemittierender Elemente (50) erforderlich ist, wobei
der DC-DC-Umwandlungsteil (2) aufweist: eine Reihenschaltung, die ein Schaltelement (30), eine Spule (31), einen Kondensator (32) und einen Widerstand (34) enthält, die zwischen Ausgangsenden des AC-DC-Umwandlungsteils (1) miteinander verbunden sind; und einen Steuerteil (4), der einen zu dem einen oder den mehreren festen lichtemittierenden Elementen (50) fließenden Ansteuerungsstrom unter Verwendung des Widerstands (34) erfasst und anschließend eine Schaltsteuerung des Schaltelementes (30) entsprechend einem Ergebnis der Erfassung des Ansteuerungsstroms durchführt,
wobei das eine oder die mehreren festen lichtemittierenden Elemente zwischen beiden Enden des Kondensators (32) angeschlossen ist bzw. sind,
**dadurch gekennzeichnet, dass** sie ferner aufweist:
eine Einrichtung (6; 8) zum erzwungenen Ausschalten, die den Steuerteil (4) veranlasst, das Schaltelement (30) auszuschalten, wenn die Ausgangsspannung (VDC) des AC-DC-Umwandlungsteils (1) in einem Zustand, in dem der Steuerteil (4) die Schaltsteuerung durchführen kann, unter einen ersten vorbestimmten Wert fällt, und den Steuerteil (4) veranlasst, die Schaltsteuerung des Schaltelementes (30) entsprechend einem Ergebnis der Erfassung des Ansteuerungsstroms wieder zu starten, wenn die Ausgangsspannung (VDC) des AC-DC-Umwandlungsteils (1) einen zweiten vorbestimmten Wert überschreitet, der höher ist als der erste vorbestimmte Wert.

2. Ansteuerungsvorrichtung für feste lichtemittierende Elemente nach Anspruch 1, wobei
der Steuerteil (4) nach der Ausschaltung des Schaltelementes (30) das Schalten des Schaltelementes (30) mit einer relativen Einschaltdauer des Schaltelementes, die auf einen vorbestimmten Wert oder weniger begrenzt ist, wieder startet, während die Ausgangsspannung (VDC) des AC-DC-Umwandlungsteils (1) unter dem zweiten vorbestimmten Wert liegt, und den Grenzwert freigibt, wenn die Ausgangsspannung (VDC) den zweiten vorbestimmten Wert überschreitet.

3. Ansteuerungsvorrichtung für feste lichtemittierende Elemente nach Anspruch 1, wobei
der Steuerteil (4) einen AUS-Zustand des Schaltelementes (30) aufrechterhält, während die Ausgangsspannung (VDC) des AC-DC-Umwandlungsteils (1) unterhalb des zweiten vorbestimmten Wertes liegt.

4. Ansteuerungsvorrichtung für feste lichtemittierende Elemente nach Anspruch 1, wobei
die Einrichtung für erzwungenes Ausschalten eine Energiequellenschaltung (8) aufweist, die eingerichtet ist, um eine Betriebsenergiequelle aus der Ausgangsspannung (VDC) des AC-DC-Umwandlungsteils (1) zu erzeugen und die erzeugte Betriebsenergiequelle zu dem Steuerteil (4) zu liefern, wobei der Steuerteil (4) den Betrieb stoppt, um das Schaltelement (30) zwangsweise auszuschalten, wenn die Energiequellenspannung (Vcc) unter eine Betriebsstoppspannung (Vstop) fällt, und den Betrieb wieder startet, um das Schalten des Schaltelementes (30) zu steuern, wenn die Energiequellenspannung (Vcc) eine Betriebsstartspannung (Vstart) überschreitet.

5. Beleuchtungsvorrichtung, die aufweist:
ein Lichtquellenteil (5), das ein oder mehrere feste lichtemittierende Elemente (50) enthält; und
eine Beleuchtungseinrichtung, die die Ansteuerungsvorrichtung (1-4, 6, 7; 8) für feste lichtemittierende Elemente nach einem beliebigen der Ansprüche 1 bis 4 enthält und das Lichtquellenteil (5) zum Leuchten bringt.

## Revendications

1. Dispositif d'attaque d'élément électroluminescent à semi-conducteurs, comprenant :
une partie de conversion alternatif-continu (1) convertissant une tension alternative (VAC) fournie par une source d'alimentation en courant alternatif (100) en une tension continue souhaitée (VDC) et délivrant ensuite la tension continue ; et
une partie de conversion continu-continu (2) abaissant la tension de sortie (VDC) de la partie de conversion alternatif-continu (1) jusqu'à une tension d'attaque (Vf) requise pour attaquer un ou plusieurs éléments électroluminescents à semi-conducteurs (50),
dans lequel la partie de conversion continu-continu (2) comprend : un circuit série comprenant un élément de commutation (30), une inductance (31), un condensateur (32) et une résistance (34) connectés l'un à l'autre entre des bornes de sortie de la partie de conversion alternatif-continu (1) ; et une partie de commande (4) détectant un courant d'attaque circulant vers le ou les éléments électroluminescents à semi-conducteurs (50) par utilisation de la résistance (34) et effectuant ensuite une commande de commutation de l'élément de commutation (30) en fonction d'un résultat de la détection du courant d'attaque,
dans lequel le ou les éléments électroluminescents à semi-conducteurs sont connectés entre les deux bornes du condensateur (32),
**caractérisé en ce qu'**il comprend en outre :
un moyen de blocage forcé (6 ; 8) qui amène la partie de commande (4) à bloquer l'élément de commutation (30) lorsque la tension de sortie (VDC) de la partie de conversion alternatif-continu (1) chute au-dessous d'une première valeur prédéterminée dans un état dans lequel la partie de commande (4) peut effectuer la commande de commutation, et amène la partie de commande (4) à recommencer la commande de commutation de l'élément de commutation (30) en fonction du résultat de la détection du courant d'attaque lorsque la tension de sortie (VDC) de la partie de conversion alternatif-continu (1) dépasse une seconde valeur prédéterminée supérieure à la première valeur prédéterminée.

2. Dispositif d'attaque d'élément électroluminescent à semi-conducteurs selon la revendication 1, dans lequel :
la partie de commande (4), après avoir bloqué l'élément de commutation (30), recommence à commuter l'élément de commutation (30) avec un rapport cyclique de déblocage de l'élément de commutation (30) limité à une valeur prédéterminée ou moins tant que la tension de sortie (VDC) de la partie de conversion alternatif-continu (1) est inférieure à la seconde valeur prédéterminée, et s'affranchit de la limite lorsque la tension de sortie (VDC) dépasse la seconde valeur prédéterminée.

3. Dispositif d'attaque d'élément électroluminescent à semi-conducteurs selon la revendication 1, dans lequel :
la partie de commande (4) maintient un état bloqué de l'élément de commutation (30) tant que la tension de sortie (VDC) de la partie de conversion alternatif-continu (1) est inférieure à la seconde valeur prédéterminée.

4. Dispositif d'attaque d'élément électroluminescent à semi-conducteurs selon la revendication 1, dans lequel :
le moyen de blocage forcé comprend un circuit source d'alimentation (8) conçu pour créer une source d'alimentation de fonctionnement à partir de la tension de sortie (VDC) de la partie de conversion alternatif-continu (1) et pour fournir la source d'alimentation de fonctionnement créée à la partie de commande (4), la partie de commande (4) arrêtant de fonctionner afin de bloquer d'une manière forcée l'élément de commutation (30) lorsque la tension de source d'alimentation (Vcc) chute au-dessous d'une tension d'arrêt de fonctionnement (Vstop) et recommençant à fonctionner afin de commander la commutation de l'élément de commutation (30) lorsque la tension de source d'alimentation (Vcc) dépasse une tension de début de fonctionnement (Vstart).

5. Dispositif d'éclairage comprenant :
une partie source de lumière (5) comprenant un ou plusieurs éléments électroluminescents à semi-conducteurs (50) ; et
un dispositif d'allumage comprenant le dispositif d'attaque d'élément électroluminescent à semi-conducteurs (1-4, 6, 7 ; 8) selon l'une quelconque des revendications 1 à 4 et allumant la partie source de lumière (5).
